# DEMANDE DE BREVET EUROPEEN

(11) **EP 2 881 865 A1**
(43) Date de publication de la demande: **10.06.2015**
(21) Numéro de dépôt: 13306664.7
(22) Date de dépôt: 04.12.2013
(51) Int. Cl.: G06F 17/30

(54) **Système informatique comportant une base de données mémorisée sous la forme d'une table**

(71) Demandeur: Knitiv, 69270 Fontaines Saint Martin (FR)
(72) Inventeur: VALLET Hervé, 69270 FONTAINES SAINT MARTIN (FR); DESFORGES, Frédéric, 69510 SOUCIEU EN JARREST (FR)
(74) Mandataire: Cabinet Laurent & Charras

(57) **Abrégé**

Un système informatique comprend une mémoire informatique comportant une base de données alphanumériques décrivant un ensemble d'entités et des relations entre des couples d'entités dudit ensemble.

Un objet numérique est créé pour chaque entité et chaque objet numérique comprend un identifiant unique, chaque couple d'attribut d'entité et de valeur d'attribut d'entité de l'entité dudit objet et pour chaque relation entre l'entité dudit objet et une autre entité, un couple constitué de l'attribut de la relation et de l'identifiant de l'objet associé à l'autre entité ;

Les données alphanumériques de la base de données sont mémorisées dans une table unique comportant, pour chaque objet numérique :
- une ligne pour chaque couple dudit objet constitué d'un attribut d'entité et d'une valeur d'attribut d'entité, ladite ligne comprenant l'identifiant unique dudit objet et ledit attribut et ladite valeur d'attribut dudit couple; et
- une ligne pour chaque couple dudit objet constitué d'un attribut de relation et d'un identifiant, ladite ligne comprenant l'identifiant unique de l'objet, ledit attribut et ledit identifiant dudit couple.

## Description

### DOMAINE DE L'INVENTION

L'invention concerne le domaine du stockage des données informatiques, et plus particulièrement les bases de données.

### ETAT DE LA TECHNIQUE

Comme cela est connu en soi, une base de données dite « relationnelle » permet de stocker sur un support informatique des données modélisées selon une relation logique particulière. La base de données relationnelle permet notamment de séparer la représentation logique des données de la manière dont elles sont effectivement structurées et mémorisées sur un support informatique.

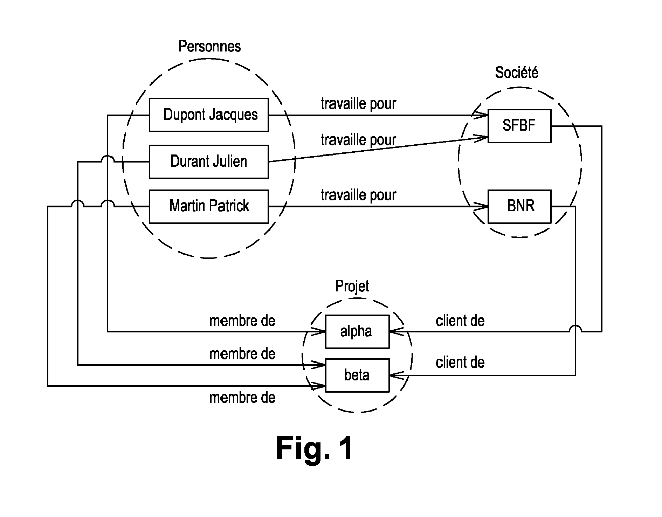

Par exemple, la figure 1 illustre un ensemble d'identités, notamment des personnes, décrites par leurs noms et leurs prénoms, des sociétés, décrites par leurs raisons sociales, et des projets décrits par leurs noms, ainsi qu'un ensemble de relations entre ces différentes entités, notamment des relations de travail entre les personnes et les sociétés, des relations de client entre les projets et les sociétés et des relations d'implication des personnes dans les projets. Par « entité », on entend une chose pouvant être décrite, notamment les choses usuellement décrites dans les bases de données relationnelles classiques, par exemple des personnes, des sociétés, des documents, etc...

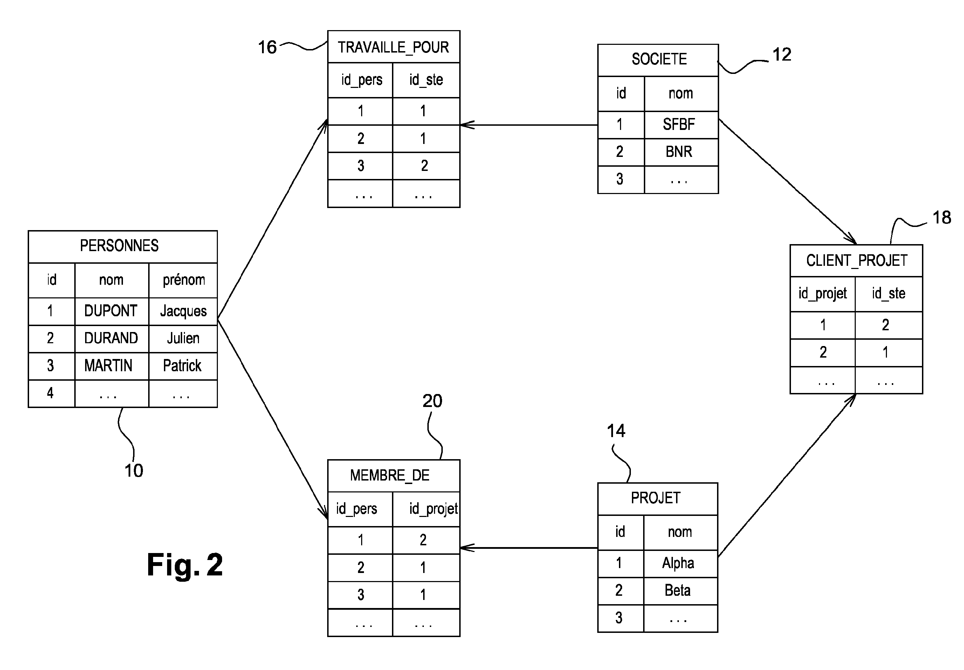

Le codage de ces informations dans une base de données relationnelle est réalisé sous la forme d'une pluralité tables. Notamment, une table est créée pour chaque type d'entité et pour chaque type de relation. Par exemple, en se référant à la figure 2, les données descriptives des personnes, sont mémorisées dans une table « personne » **10,** les données descriptives des sociétés dans une table « société » **12,** et les données descriptives des projets sont mémorisées dans un table « projet » **14.** Chaque entité se voit assigner un identifiant unique, par exemple un numéro mémorisé dans une colonne « id » de chaque table, et une table est créé pour chaque type de relation entre les entités. Notamment, une table « travaille pour » **16** est créée pour stocker des données de relation de travail entre les personnes et les sociétés et stocke à cet effet des couples constitués d'un identifiant de personne, stocké dans une colonne « id_pers », et d'un identifiant de société, stocké dans une colonne « id_ste ». De manière analogue, une table « client projet » **18** stocke des données de relation entre les sociétés et les projets, et une table « membre de » **20** stocke des données de relation entre les personnes et les projets.

Une base de données relationnelle permet également la mise en oeuvre d'opérations logiques d'algèbre relationnelle afin de manipuler son contenu. Notamment, l'exploitation du contenu de la base de données est réalisée au moyen d'un moteur de recherche, plus connu sous le nom de système de gestion de base de données (SGBD), permettant des opérations de jointure, de sélection et de projection. Un langage informatique couramment utilisé pour formuler des requêtes d'algèbre relationnelle sur la base de données est par exemple le langage SQL (pour « *Structure Query Language* »).

L'opération de jointure consiste notamment dans une même requête à indiquer plusieurs tables dans laquelle une information est recherchée. Par exemple, une demande visant à savoir pour quelle société travaille « Dupont Jacques », est transformée en au moins deux opération de jointure, la première impliquant la table « personne » **10** et la table « travail pour » **16,** et une seconde impliquant la table «travaille pour » **16** et la table « société » **16,** chacune des opérations résultant en une table temporaire qu'il convient encore d'interroger.

D'une manière générale, le nombre d'accès aux tables mémorisées dépend du nombre et la nature des relations qu'entretiennent les entités entre elle. On observe ainsi que les bases de données relationnelles gèrent de manière insuffisante les relations en raison de la structure tabulaire de la mémorisation des données, les relations n'étant envisagées qu'uniquement sous la forme de «jointures internes» entre des tables. La récupération des données peut donc être compliquée et/ou consommatrice de ressources lorsque la requête est mal formulée ou lorsqu'il s'agit de caractériser les relations par des propriétés particulières. Notamment, lorsque les informations sont fortement hiérarchisées et les relations entre entités sont dissymétriques, une requête peut entrainer l'interrogation récursive des tables. On pourra par exemple se référer au document « Graph Databases » de Ian Robinson et al., O'Reilly Media Inc., 2013, qui décrit au chapitre 2 les limitations des bases de données relationnelles.

Un autre inconvénient des bases de données relationnelles est que la structure des données mémorisées sur le support informatique est fixée a priori. Il est donc compliqué de rajouter de nouveau champs, ou « attributs », décrivant les entités ou de nouveaux types d'entité et de nouveau type de relations. Cela suppose en effet de revoir le codage des données sur le support informatique, notamment en rajoutant de nouvelles tables et/ou de nouvelles colonnes aux tables existantes, ce qui s'avère couteux et long.

Une solution mise en oeuvre pour pallier ces défauts est d'utiliser une architecture différente pour la mémorisation des données, et notamment les structures dites « NoSQL » (pour « *Not only SQL* ») dont l'unité logique n'est plus la table de données. Si les bases de données NoSQL présentent donc un certain nombre d'avantages, elles sont cependant fortement dépendantes de leur usage et du type de données qu'elles mémorisent. Notamment, lors de la construction d'une base de données NoSQL, il convient de choisir malgré tout une architecture particulière, soit centrée sur les entités, soit centrée sur leur relation, de sorte que l'évolution de la base de données sur une nouvelle architecture est difficile.

### EXPOSE DE L'INVENTION

Le but de la présente invention est de proposer une base de données dont l'architecture ne privilégie ni les entités ni leur relation, et dont la manipulation du contenu peut être réalisée à l'aide d'un nombre limité d'opérations.

A cet effet, l'invention a pour objet un système informatique comprenant :
- une mémoire informatique comportant une base de données alphanumériques décrivant un ensemble d'entités et des relations entre des couples d'entités dudit ensemble, chaque entité étant décrite par au moins un couple constitué d'un attribut d'entité qualifiant un type d'information et d'une valeur de l'attribut d'entité, et chaque relation entre deux entités étant décrite par au moins un attribut de relation qualifiant un type de lien entre les deux entités;
- une unité centrale, connectée à la mémoire informatique, apte à exécuter un moteur de recherche pour interroger la base de données en fonction de requêtes d'interrogation et pour fournir le résultat des recherches ; et
- une interface, connectée à l'unité centrale, pour entrer les requêtes d'interrogation et pour communiquer les résultats des recherches fournies par le moteur de recherche.

Selon l'invention :
- un objet numérique est créé pour chaque entité de l'ensemble d'entités, chaque objet numérique d'entité créé étant référencé par un identifiant unique, et chaque objet numérique comprenant :
   ■ l'identifiant unique dudit objet ;
   ■ chaque couple d'attribut d'entité et de valeur d'attribut d'entité de l'entité dudit objet ; et
   ■ pour chaque relation entre l'entité dudit objet et une autre entité, un couple constitué de l'attribut de la relation et de l'identifiant de l'objet associé à l'autre entité ;
- les données alphanumériques de la base de données sont mémorisées dans une table unique comportant, pour chaque objet numérique :
   ■ une ligne pour chaque couple dudit objet constitué d'un attribut d'entité et d'une valeur d'attribut d'entité, ladite ligne comprenant l'identifiant unique dudit objet et ledit attribut et ladite valeur d'attribut dudit couple; et
   ■ une ligne pour chaque couple dudit objet constitué d'un attribut de relation et d'un identifiant, ladite ligne comprenant l'identifiant unique de l'objet, ledit attribut et ledit identifiant dudit couple.

En d'autres termes, tout d'abord la représentation logique des données est réalisée en fonction d'unités logiques, appelés « objets numériques », une unité logique rassemblant l'ensemble des données relatives à une entité, à savoir la description et les relations de l'entité. Un objet numérique est donc à la fois une entité et des relations impliquant celle-ci. Ensuite, la base de données selon l'invention, se fondant sur cette représentation, mémorise dans une table unique lesdits objets ligne par ligne. Ainsi, il n'y a aucune préférence entre les données décrivant les entités et les données décrivant leurs relations, et il n'existe plus de jointures internes dans la base de données.

La récupération des données concernant une entité, à savoir les données décrivant l'entité et les données décrivant les relations impliquant celles-ci, peut ainsi être réalisée de manière simple et invariante en un nombre limité et constant de recherches, ou requête, élémentaires.

Par ailleurs, une unité logique est elle-même décrite à l'aide de couples unitaires, à savoir un attribut et une valeur d'attribut pour les données descriptives de l'entité, et un attribut et un lien vers une autre entité pour les données concernant les relations de l'entité. L'ajout de données concernant un nouveau type d'entité se fait donc simplement en définissant un nouvel objet numérique, et en ajoutant des lignes correspondantes à la table. De même, l'ajout dans la base de données de données d'un nouveau type pour des entités existantes ne nécessite pas de recoder la base de données, par exemple en lui prévoyant de nouvelles colonnes, mais simplement en ajoutant des lignes comportant un nouvel attribut.

En outre, il est également possible de très simplement prévoir une organisation sémantique des données, par exemple en introduisant des concepts dont les entités sont des instances, sans que cela suppose une structure particulière des données sur le support informatique mémorisant la base de données.

Selon des modes de réalisation, le système comprend une ou plusieurs des caractéristiques suivantes.

Le moteur de recherche est apte à mettre en oeuvre, en fonction d'une requête d'interrogation comportant une valeur d'attribut d'une entité :
■ une première recherche, dans la table unique, de la ligne comprenant la valeur d'attribut et la récupération de l'identifiant de l'objet numérique comportant la valeur d' attribut ; et
■ une deuxième recherche, dans la table unique, des lignes comportant l'identifiant récupéré.

Des entités sont des fichiers informatiques mémorisées dans la mémoire informatique, et en ce que pour chaque fichier, la valeur de l'attribut de l'objet numérique associé audit fichier est un chemin d'accès dudit fichier dans mémoire informatique.

L'interface est apte à recevoir, et communiquer à l'unité centrale, des données alphanumériques comprenant au moins un couple constitué d'un attribut et d'une valeur d'attribut d'une nouvelle entité, et l'unité centrale est apte à exécuter un module de mise à jour de la base de données en créant un objet numérique pour la nouvelle entité, ledit objet comprenant un identifiant unique et le couple d'attribut et de valeur d'attribut communiqué, et en en ajoutant à la table unique une ligne constituée de l'identifiant unique et le couple dudit objet.

L'interface est apte à recevoir, et communiquer à l'unité centrale, des données alphanumériques concernant un couple d'un attribut et d'une valeur d'attribut d'une entité de l'ensemble d'entités, et l'unité centrale est apte à exécuter un module de mise à jour de la base de donnée en rajoutant une ligne à la table unique comprenant l'identifiant de l'objet numérique associé à l'entité et le couple d'attribut et de valeur d'attribut reçu via l'interface.

L'interface est apte à recevoir, et communiquer à l'unité centrale, des données alphanumériques concernant un attribut de relation entre une entité de l'ensemble de l'entité et une autre entité de l'ensemble d'entités, et l'unité centrale est apte à exécuter un module de mise à jour de la base de donnée en rajoutant une ligne à la table unique comprenant l'identifiant de l'objet numérique associé à l'entité, l'attribut de la relation et l'identifiant de l'objet numérique associé à l'autre entité.

La table unique comporte une colonne d'horodatage comprenant la date de création de chaque ligne de la table.

La table unique comporte une colonne de statut comprenant la valeur d'un statut pour chaque ligne, ledit statut décrivant l'état actif ou inactif de ladite ligne.

Des entités concernent des concepts et des entités concernent des instances desdits concepts, l'objet numérique d'une entité concernant une instance de concept étant relié à un objet numérique concernant le concept de l'instance par une relation d'appartenance.

### BREVE DESCRIPTION DES FIGURES

L'invention sera mieux comprise à la lecture de la description qui va suivre, donnée uniquement à titre d'exemple, et faire en relation avec les dessins annexés, dans lesquels :
- la figure 1 est un exemple d'entités et de relations qu'entretiennent les entités ;
- la figure 2 est une vue schématique des tables d'une base de données relationnelle de l'état de la technique, utilisées pour stocker sur un support informatique les données relatives aux entités et aux relations de la figure 1 ;
- les figures 3A et 3B illustrent la représentation logique d'information par des objets numériques selon l'invention ;
- la figure 4 illustre la représentation logique de l'invention des informations décrites à la figure 1 ;
- la figure 5 est un exemple de table unique stockant des objets numériques de la figure 3 ;
- la figure 6 est un exemple de table stockant les objets numériques de la figure 4 ;
- les figures 7 illustrent l'ajout de données concernant un nouveau type d'entité aux données déjà existante de la base de données selon l'invention, par exemple des données relatives à des documents
- les figures 8 illustrent l'ajout d'un nouveau type de données descriptives aux données déjà existantes de la base de données selon l'invention, par exemple un numéro de téléphone et une date de naissance ; et
- la figure 9 est une vue schématique d'un système informatique selon l'invention.

### DESCRIPTION DETAILLEE DE L'INVENTION

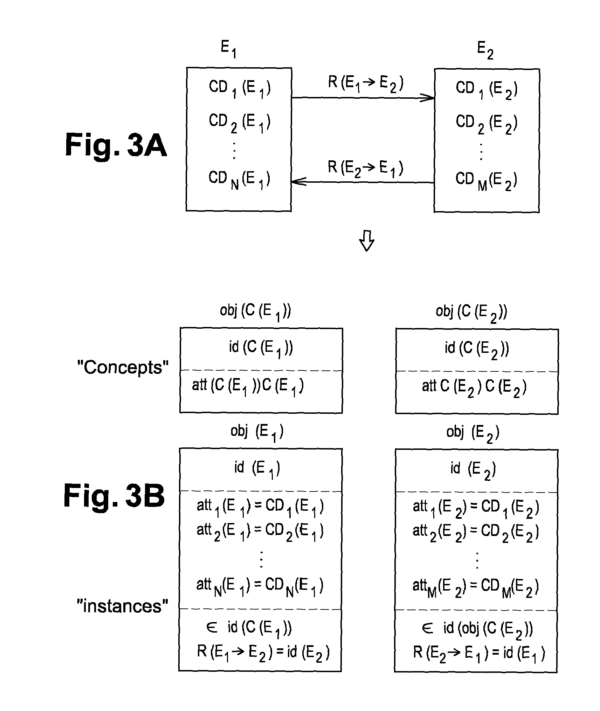

La figure 3 illustre une représentation logique d'entités *E1, E2* selon l'invention. Comme illustré à la figure 3A, des entités *E1, E2* sont décrites chacune par un ensemble de données descriptives alphanumériques *CD₁(E1)-CD_{N}(E1)*, *CD₁(E2)-CD_{M}(E2)*, et entretiennent des relations l'une avec l'autre, les relations étant décrites par des données de relation alphanumériques *R(E1→E2)*, *R(E2→E1)*. Les relations sont orientées et comprennent une entité de départ et une entité d'arrivée. Par exemple, l'entité *E1* est la personne « Dupont Jacques », décrite par son nom et son prénom, l'entité *E2* est la société « SNBF », décrite par sa raison sociale et l'adresse de son siège social, la relation *R(E1→E2)* qu'entretient « Dupont Jacques » avec « SNBF » étant une relation de travail décrite par la donnée « travaille pour », et la relation *R(E2→E1)* qu'entretient la société « SNBF » avec « Jacques Dupont » étant vide.

Comme illustré à la figure 3B, l'ensemble des informations concernant les entités *E1, E2* sont représentées logiquement sous la forme d'objets numériques respectifs *Obj(E1), Obj(E2).* Chacun des objets *Obj(E1), Obj(E2)* d'une entité *E1, E2* comporte notamment, en se référant par exemple à l'entité *E1 :*
a. un identifiant unique *id(E1),* différent des identifiants des autres objets numériques, par exemple un numéro;
b. pour chaque donnée descriptive *CD₁(E1)-CD_{N}(E1)* de l'entité *E1,* un couple constitué d'un attribut *att₁(E1)-att_{N}(E1)* de ladite donnée et ladite donnée, l'attribut qualifiant une catégorie à laquelle la donnée appartient, ou, dit autrement, un type de données ou un concept dont la donnée descriptive est une instance. Par exemple, l'attribut de la donnée descriptive « Dupont » est le concept de « nom ». La donnée « Dupont » est ainsi représentée dans l'objet numérique par le couple (nom, Dupont) ; et
c. pour chaque relation dont l'entité *E1* est le point de départ, un couple constitué d'un attribut de relation, à savoir la donnée de relation *R(E1→E2),* et de l'identifiant *id(E2)* de l'entité d'arrivée *E2* de la relation.

De manière avantageuse et optionnelle, la représentation logique est augmentée par des objets numériques *Obj(C(E1)), Obj(C(E2))* correspondant à des entités *C(E1), C(E2)* qualifiant des concepts dont les entités particulières *E1, E2* sont des instances. Par exemple, un objet numérique *Obj(C(E1))* correspondant au concept *C(E1)* de « personne », dont l'entité *E1* « Dupont Jacques » est une instance, est créé. De même un objet numérique *Obj(C(E2))* correspondant au concept *C(E2)* de « société », dont l'entité *E2* « SNBF » est une instance, est créé. Chacun des objets *Obj(C(E1)), Obj(C(E2))* comporte également un identifiant unique *id(C(E2)), id(C(E2)),* ainsi qu'au moins un couple constitué d'un attribut qualifiant le nom de l'objet et la description du concept. Par exemple, concernant l'objet concept de « personne », l'objet numérique comporte le couple (nom, personne). Chacun des objets numériques *Obj(E1), Obj(E2),* dont les entités *E1, E2* sont les instances des concepts *C(E1), C(E2),* sont par ailleurs complétés par un couple constitué d'un attribut d'appartenance « ∈ » et de l'identifiant de l'objet numérique de concept *Obj(C(E1)), Obj(C(E2))* correspondant. Comme cela est connu en soi, l'introduction de concepts dans la représentation logique des données permet d'ajouter un contenu sémantique, et par conséquent de manipuler les données au moyen de recherche sémantiques. Selon l'invention, les entités « concepts » *C(E1), C(E2)* et les entités instances *E1, E2* sont stockées de manière identique et manipulées de manière identique, ce qui permet une grande souplesse, comme cela sera expliqué plus en détails par la suite.

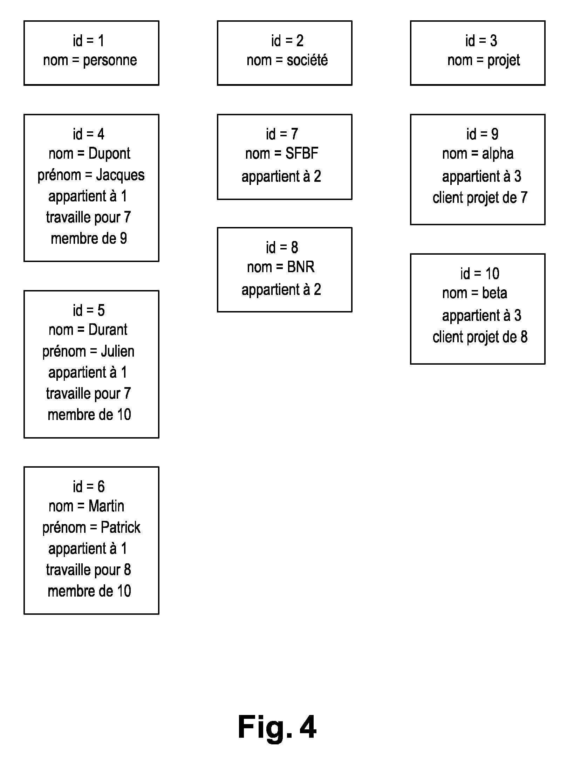

Bien que la représentation logique selon l'invention ait été illustrée à l'aide de deux entités, on comprend aisément que cette représentation s'applique à n'importe quel nombre d'entités et de relations. Par exemple, la figure 4 illustre la représentation logique des informations illustrées à la figure 1.

Il va à présent être décrit la manière dont sont stockées les données sur un support informatique, la structure de stockage étant liée à la représentation logique précédemment décrite.

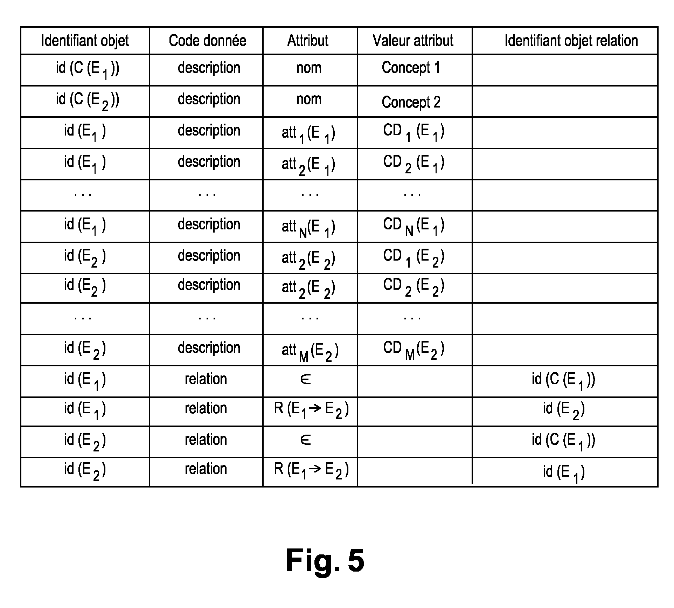

Plus particulièrement, comme illustrée à la figure 5, les données alphanumériques contenues dans les objets numériques sont stockées dans une table unique. La table comporte une colonne « *identifiant objet* », une colonne « *code donnée* », une colonne « *attribut* », une colonne *« valeur attribut* » et une colonne « *identifiant objet relation* » et chaque objet numérique *Obj(E1), Obj(E2), Obj(C(E1)), Obj(C(E2))* est alors mémorisé ligne par ligne dans ladite table. Notamment, pour chaque couple décrivant l'entité de l'objet, constitué d'un attribut et d'une valeur d'attribut, une ligne de la table est créée avec l'identifiant de l'objet mémorisé dans la colonne « *identifiant objet* », l'attribut mémorisé dans la colonne « *attribut* », la valeur de l'attribut mémorisé dans la colonne *« valeur attribut* ». La donnée de description d'entité mémorisée dans la ligne créée est par ailleurs identifiée par un code prédéterminé, par exemple le mot « *description* », enregistré dans la colonne « *code donnée* ». De manière analogue, pour chaque couple décrivant une relation impliquant l'entité, constitué d'un attribut de relation et de l'identifiant de l'objet numérique qui est le point d'arrivé de la relation, une ligne de la table est créé avec l'identifiant de l'objet mémorisé dans la colonne *« identifiant objet* », l'attribut mémorisé dans la colonne « *attribut* » et l'identifiant de l'objet point d'arrivée de la relation mémorisé dans la colonne « *identifiant objet relation* ». La donnée de description de relation mémorisée dans la ligne créée est par ailleurs identifiée par un code prédéterminé, par exemple le mot « *relation* », enregistré dans la colonne « *code donnée* ».

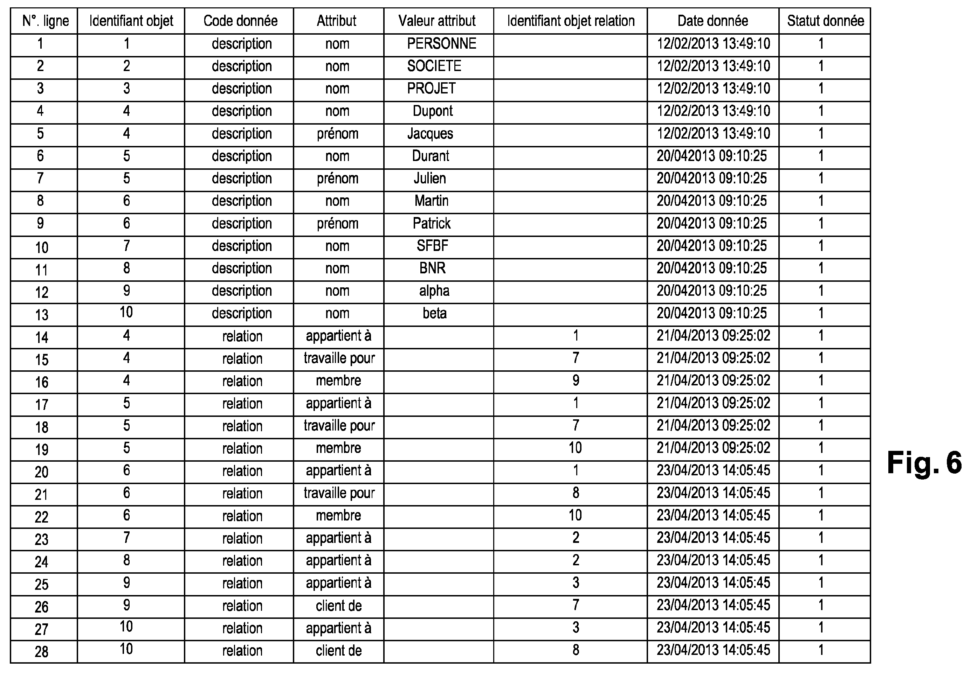

Bien entendu, le nom donné aux colonnes importe peu et la colonne « *identifiant objet relation* » pourrait être fusionnée avec la colonne « *valeur attribut* ». De même, il est possible de prévoir plusieurs colonnes « *valeur attribut* » en fonction de la nature des données afin de faciliter la gestion et la manipulation de la table unique. D'autres colonnes comportant des données complémentaires peuvent également être prévues, comme cela est par exemple illustré à la figure 6 qui est une table unique obtenue par la mémorisation sur un support informatique des objets numériques de la figure 3B. La table de la figure 6 comporte notamment des colonnes optionnelles « *date donnée* », qui mémorise la date et l'heure de la création des lignes, « *statut donnée* » qui mémorise le statut des données mémorisées dans les lignes, la valeur « 1 » signifiant que les données sont en vie et la valeur « 0 » signifiant que les données sont ne sont plus valides ou sont « inactives ». En outre, il est possible de préciser de manière plus fine le type d'information codée dans la table, notamment en prévoyant plusieurs types codes de description et plusieurs types de code de relation.

Grâce à la représentation logique des données et de leur mémorisation sous forme de table unique, il est possible de récupérer des données relatives à une entité de manière invariante, quel que soit la nature et le nombre de relations dans laquelle elle est impliquée.

Notamment, il est possible de récupérer l'ensemble des données d'une entité en seulement deux accès à la table unique, contrairement aux bases de données relationnelles de l'état de la technique dont le nombre d'accès est variable et parfois récursif. Par exemple, la récupération des données relatives à « Dupont Jacques », à savoir les données descriptives de celui-ci, mais également les relations qu'il entretient avec d'autres entités et identifiant de ces autres entités, ne nécessite que deux accès à la table selon l'invention, à savoir un premier accès à la table pour récupérer l'identifiant de l'objet numérique lié à « Dupont Jacques », et un deuxième accès à la table pour extraire l'ensemble des lignes comprenant l'identifiant récupéré. En se référant à la base de données relationnelle de l'état de la technique illustrée à la figure 2, l'opération correspondant au deuxième accès nécessiterait 2N accès aux tables, ou N est le nombre de tables de relation liées à la table « *personnes* ». En effet, il faudrait tout d'abord interroger l'ensemble des tables de relation pour connaître les relations dans lesquelles « Dupont Jacques » est impliqué, à savoir un accès à la table *« travaille pour* », un accès à la table *« membre de* », un accès à la table *« client de* », et ainsi récupérer les identifiants des entités en relation avec *« Dupont Jacques* ». Si l'exemple des données illustré à la figure 1 est simple, dans la réalité le nombre d'entités et de relations différentes est très important et l'interconnexion entre les entités est plus complexe, de sorte que traverser les jointures entre les tables est très consommatrice de ressource. L'absence de jointure dans la base de données selon l'invention permet donc de rendre robuste l'extraction des données, en proposant, non pas une extraction nécessairement plus rapide, mais un schéma invariant. L'utilisateur de la base de données peut ainsi aisément prévoir quel type de ressources il peut allouer à la gestion de la base de données. Au contraire dans l'état de la technique, en raison du nombre variable d'accès aux tables, et de la possibilité d'accès récursifs à celle-ci, l'utilisateur doit généralement prévoir des ressources les plus puissantes possibles pour faire face à une charge excessive d'opération qui pourrait survenir, ou bien limiter la puissance des ressources et s'accommoder des situations de surcharge qui ralentissent le système informatiques dans son entier.

En outre, la colonne *« code donnée* » permet de réduire le nombre de lignes interrogées en limitant l'interrogation aux seules lignes comportant le code *« relation* » lorsqu'il est recherché les entités liées par des relations lors d'un accès à la table. De même, le code donné *« description* » permet de limiter l'interrogation de la table aux seules lignes comprenant ce code lorsque des données descriptives d'entité sont uniquement recherchées lors d'un accès à la table.

Par ailleurs, la base de données selon l'invention permet le stockage de données concernant de nouvelles entités et /ou de nouvelles relations de manière très simple, la mise à jour correspondante de la table consistant en l'ajout de lignes.

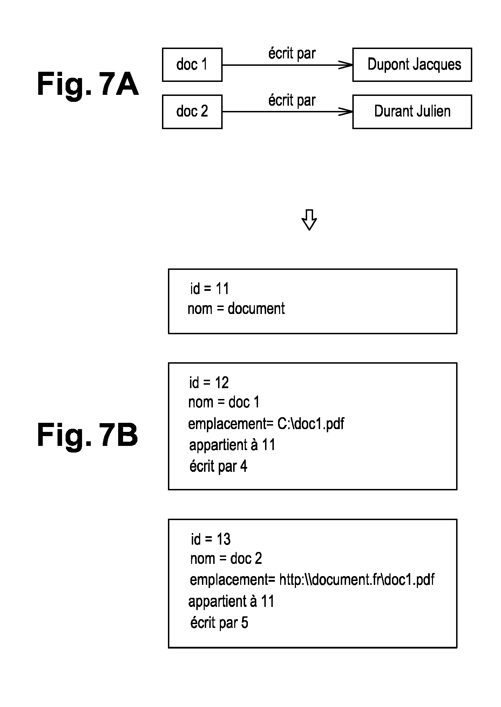

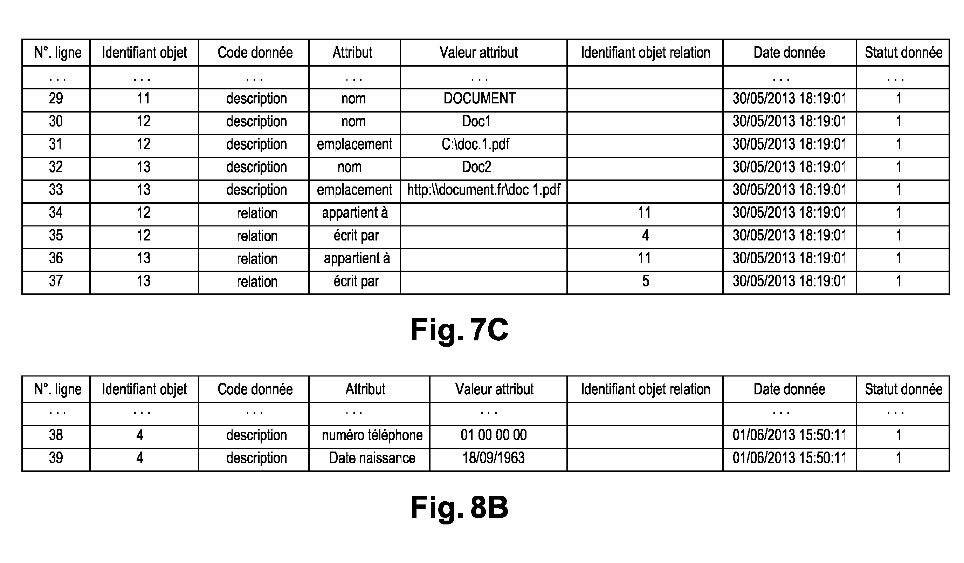

Par exemple, en se référant aux figures 7, lorsqu'il est souhaité prendre en compte de nouvelles entités « doc1 » et « doc2 », à savoir des documents écrits respectivement par « Dupont Jacques » et « Durant Julien » (figure 7A), la représentation logique de ces données est réalisée sous la forme de nouveaux objets numériques comprenant les données descriptives et les données de relation de ces entités (figure 7B), puis des lignes correspondantes sont ajoutées à la table déjà existantes (figure 7C). De manière avantageuse et optionnelle, un objet numérique correspondant au concept « document » est également créé et ajouté dans la table. On note ainsi que, contrairement à une base de données relationnelle de l'état de la technique qui nécessite la création d'une nouvelle table pour le concept « document » et autant de tables de relation que de type de relation impliquant les documents, l'invention consiste simplement à compléter la table existante en lui ajoutant de nouvelles lignes.

De manière avantageuse, la table unique ne stocke que des données alpha-numériques mais pas de fichiers numériques. La table reste ainsi limitée en poids et est facilement transportable. De manière avantageuse et optionnelle, la gestion des fichiers, quel que soit le type de ceux-ci (fichier texte, audio, vidéo, etc), est réalisée en définissant un attribut « *emplacement* » et en donnant comme valeur pour cet attribut le chemin d'accès à l'emplacement physique où est mémorisé le fichier. Il peut par exemple s'agir d'un emplacement sur un support informatique, d'une adresse sur un réseau de communication, par exemple internet, ou autres.

De manière optionnelle, afin de réduire le poids de la table, et donc par exemple augmenter sa portabilité, un nombre limité d'octets est alloué par type d'information mémorisée dans la table, par exemple un nombre égal d'octets par toutes les cases de la table. En effet, certaines informations alphanumériques requièrent un nombre important d'octets pour pouvoir être entièrement mémorisées. C'est par exemple le cas des données de géolocalisation. La solution consistant à prévoir un nombre d'octets suffisant, par exemple pour les cases de la colonne « attribut » ou les cases d'une colonne « géolocalisation » spécifiquement prévue pour le stockage de ce type de données, mène donc à un espace de stockage alloué à la table qui est important. Afin de réduire cet espace, les données alphanumériques nécessitant beaucoup d'octets sont mémorisées ailleurs que dans la table elle-même, par exemple dans une table prévue à cet effet, et la table selon l'invention comprend des liens vers lesdites données. Par exemple, chaque donnée est caractérisée par attribut « *emplacement* » et une valeur d'attribut constituée d'un pointeur vers la données ou un chemin d'accès à l'emplacement physique où elle est stockée. Il est ainsi possible de réduire l'allocation d'espace à la table en allouant un nombre réduit d'octets par case de la table ou par type d'information. De préférence, pour ce type de lien à l'intérieur même de la base de données, il est défini un « *code données* » spécifique, par exemple « *internal link* ». On note par ailleurs que la construction d'une ou plusieurs tables supplémentaires n'est pas dictée par la représentation des données et/ou les liens qui existent entre elles, mais par des considérations de gestion de mémoire. La table centrale de l'invention reste donc le moyen principal de stockage des données selon le modèle de représentation décrit précédemment.

De même, concernant les informations non alphanumériques stockées hors de la base de données, par exemple les fichiers décrits précédemment, ces informations sont également caractérisées par un « *code données* » spécifique, par exemple « *external link* ». Ceci permet notamment de différentier les deux types de lien gérés par la table, à savoir les liens internes et les liens externes à la base de données.

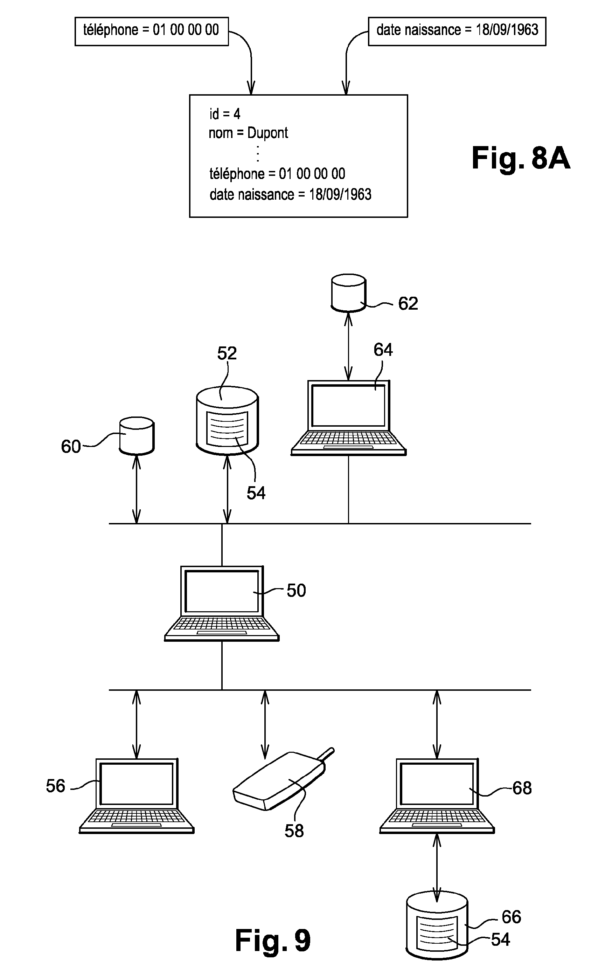

De plus, l'ajout de données descriptives d'un nouveau type pour des entités déjà existantes se fait également très simplement. Par exemple, en se référant aux figures 8, si l'on souhaite décrire de manière plus complète l'entité « Dupont Jacques » en stockant son numéro de téléphone et sa date de naissance, données absentes jusque-là, il suffit pour cela d'augmenter l'objet numérique de « Dupont Jacques » de nouveaux couples correspondants d'attribut et de valeur d'attribut (numéro de téléphone, 01 00 00 00) et (date de naissance, 18/09/1963), et d'ajouter les lignes correspondantes à la table comme illustré à la figure 8B. Un tel ajout de données nécessiterait dans une base de données relationnelle de l'état de la technique d'ajouter autant de colonnes que de nouveaux types de données dans certaines tables, ce qui implique par conséquent de modifier la structure de la base de données codée sur le support informatique.

La figure 9 est une vue schématique d'un exemple de système informatique mettant en oeuvre l'invention.

Un tel système comporte par exemple un serveur de base de données **50** comprenant, ou étant connecté à, un support informatique **52** mémorisant la table **54** selon l'invention, par exemple un disque dur, une mémoire de type SSD, ou autres. La base de données est interrogée et/ou mise à jour à l'aide du serveur **50,** par exemple muni d'une interface homme machine, ou par des moyens distants, comme par exemple un ordinateur personnel **56,** une tablette ou un smarphone **58,** connectés au serveur **50** par un réseau de communication, par exemple du type internet ou VPN, et munis d'une interface homme machine permettant l'interrogation et/ou la mise à jour de la table **54.** Le système informatique peut également comprendre un support informatique **60, 62** pour la mémorisation des fichiers informatiques référencés dans la table, soit le support **52** lui-même ou des supports différents connectés au serveur **50** directement ou au travers d'autres serveurs **64.** Par ailleurs, la table **54** peut être dupliquée sur un autre support informatique **66,** par exemple pour des raisons de sauvegarde ou d'accès à son contenu lorsque la table mémorisée dans le support **52** n'est pas accessibles, et être synchronisée à la table du support **52** par des moyens de type nuage de données **68** (« cloud »).

## Revendications

1. Système informatique comprenant :
- une mémoire informatique comportant une base de données alphanumériques décrivant un ensemble d'entités et des relations entre des couples d'entités dudit ensemble, chaque entité étant décrite par au moins un couple constitué d'un attribut d'entité qualifiant un type d'information et d'une valeur de l'attribut d'entité, et chaque relation entre deux entités étant décrite par au moins un attribut de relation qualifiant un type de lien entre les deux entités;
- une unité centrale, connectée à la mémoire informatique, apte à exécuter un moteur de recherche pour interroger la base de données en fonction de requêtes d'interrogation et pour fournir le résultat des recherches ; et
- une interface, connectée à l'unité centrale, pour entrer les requêtes d'interrogation et pour communiquer les résultats des recherches fournies par le moteur de recherche,
***caractérisé* en ce que** :
- un objet numérique est créé pour chaque entité de l'ensemble d'entités, chaque objet numérique d'entité créé étant référencé par un identifiant unique, et chaque objet numérique comprenant :
■ l'identifiant unique dudit objet ;
■ chaque couple d'attribut d'entité et de valeur d'attribut d'entité de l'entité dudit objet ; et
■ pour chaque relation entre l'entité dudit objet et une autre entité, un couple constitué de l'attribut de la relation et de l'identifiant de l'objet associé à l'autre entité ;
- les données alphanumériques de la base de données sont mémorisées dans une table unique comportant, pour chaque objet numérique :
■ une ligne pour chaque couple dudit objet constitué d'un attribut d'entité et d'une valeur d'attribut d'entité, ladite ligne comprenant l'identifiant unique dudit objet et ledit attribut et ladite valeur d'attribut dudit couple; et
■ une ligne pour chaque couple dudit objet constitué d'un attribut de relation et d'un identifiant, ladite ligne comprenant l'identifiant unique de l'objet, ledit attribut et ledit identifiant dudit couple.

2. Système informatique selon la revendication 1, ***caractérisé* en ce que** le moteur de recherche est apte à mettre en oeuvre, en fonction d'une requête d'interrogation comportant une valeur d'attribut d'une entité :
■ une première recherche, dans la table unique, de la ligne comprenant la valeur d'attribut et la récupération de l'identifiant de l'objet numérique comportant la valeur d'attribut ; et
■ une deuxième recherche, dans la table unique, des lignes comportant l'identifiant récupéré.

3. Système informatique selon la revendication 1 ou 2, ***caractérisé* en ce que** des entités sont des fichiers informatiques mémorisées dans la mémoire informatique, et **en ce que** pour chaque fichier, la valeur de l'attribut de l'objet numérique associé audit fichier est un chemin d'accès dudit fichier dans mémoire informatique.

4. Système informatique selon la revendication 1, 2 ou 3, ***caractérisé***
- **en ce que** l'interface est apte à recevoir, et communiquer à l'unité centrale, des données alphanumériques comprenant au moins un couple constitué d'un attribut et d'une valeur d'attribut d'une nouvelle entité ;
- **en ce que** l'unité centrale est apte à exécuter un module de mise à jour de la base de données en créant un objet numérique pour la nouvelle entité, ledit objet comprenant un identifiant unique et le couple d'attribut et de valeur d'attribut communiqué, et en en ajoutant à la table unique une ligne constituée de l'identifiant unique et le couple dudit objet.

5. Système informatique selon l'une quelconque des revendications précédentes, ***caractérisé :***
- **en ce que** l'interface est apte à recevoir, et communiquer à l'unité centrale, des données alphanumériques concernant un couple d'un attribut et d'une valeur d'attribut d'une entité de l'ensemble d' entités ;
- et **en ce que** l'unité centrale est apte à exécuter un module de mise à jour de la base de donnée en rajoutant une ligne à la table unique comprenant l'identifiant de l'objet numérique associé à l'entité et le couple d'attribut et de valeur d'attribut reçu via l'interface.

6. Système informatique selon l'une quelconque des revendications précédentes, ***caractérisé :***
- **en ce que** l'interface est apte à recevoir, et communiquer à l'unité centrale, des données alphanumériques concernant un attribut de relation entre une entité de l'ensemble de l'entité et une autre entité de l'ensemble d'entités;
- et **en ce que** l'unité centrale est apte à exécuter un module de mise à jour de la base de donnée en rajoutant une ligne à la table unique comprenant l'identifiant de l'objet numérique associé à l'entité, l'attribut de la relation et l'identifiant de l'objet numérique associé à l'autre entité.

7. Système informatique selon l'une quelconque des revendications précédentes, ***caractérisé* en ce que** la table unique comporte une colonne d'horodatage comprenant la date de création de chaque ligne de la table.

8. Système informatique selon l'une quelconque des revendications précédentes, ***caractérisé* en ce que** la table unique comporte une colonne de statut comprenant la valeur d'un statut pour chaque ligne, ledit statut décrivant l'état actif ou inactif de ladite ligne.

9. Système informatique selon l'une quelconque des revendications précédentes, ***caractérisé* en ce que** des entités concernent des concepts et des entités concernent des instances desdits concepts, l'objet numérique d'une entité concernant une instance de concept étant relié à un objet numérique concernant le concept de l'instance par une relation d'appartenance.
